# EUROPÄISCHE PATENTSCHRIFT

(11) **EP 1 462 820 B1**
(45) Veröffentlichungstag und Bekanntmachung des Hinweises auf die Patenterteilung: **29.02.2012**
(21) Anmeldenummer: 04004796.1
(22) Anmeldetag: 02.03.2004
(51) Int. Cl.: G01S 11/12, B60R 1/00

(54) **Videobildanzeige für eine Fahrzeugumgebungserfassungseinheit**
Video indication in a unit for data collection of car environment
Indication visuelle dans un système de collecte de données pour véhicule

(30) Priorität: 24.03.2003 DE 10313002
(43) Veröffentlichungstag der Anmeldung: 29.09.2004
(73) Patentinhaber: Daimler AG, 70327 Stuttgart (DE)
(72) Erfinder: Eggers, Helmut, 89077 Ulm (DE); Kurz, Gerhard, 73240 Wendlingen (DE); Seekircher, Jürgen, Dr., 73760 Ostfildern (DE); Wohlgemuth, Thomas, 72631 Aichtal (DE)
(74) Vertreter: Moore, Derek

(56) Entgegenhaltungen:
- EP-A- 0 936 472
- EP-A- 1 361 543
- GB-A- 2 276 790

## Beschreibung

Die Erfindung betrifft eine Fahrzeugumgebungserfassungseinheit mit einer Videobildanzeige.

Moderne Fahrzeuge sind mit unterschiedlichen Assistenzsystemen ausgestattet, welche den Fahrer unterstützen sollen. Dabei werden vermehrt bildgebende Umgebungserfassungssysteme eingesetzt. Im Automobilen Bereich gibt es beispielsweise Nachtsichtsysteme bei denen mittels einem Infrarotsensor die vorausliegende Fahrzeugumgebung erfasst wird. Die erfassten Umgebungsdaten werden sodann mittels einer Datenverarbeitungseinheit zu einem Bild verarbeitet und auf einem Display abgebildet, wo sie vom Fahrer bei Bedarf abgerufen werden können.

In der EP 1172665 A2 wird ein System zur Beobachtung der vorausliegenden Umgebung eines Fahrzeugs beschrieben. Das System umfasst dabei einen Mikrocomputer zur Ermittlung auftretender Systemfehler. Wobei die Fehlerermittlungen insbesondere auf Auswertungen von Helligkeitsdaten aufgenommener Bilder basieren. Zur Aufnahme von Bildern werden hierbei zwei Kameras verwendet, welche jeweils eine Ansicht der dem Fahrzeug vorausliegenden Umgebung aufzeichnen. Wobei im Rahmen der Fehlerermittlung zunächst die Helligkeitswerte der aufgezeichneten Bilddaten mittels einer Stereo-Bildverarbeitungseinheit berechnet werden. Der Mikrocomputer bestimmt sodann anhand der berechneten Helligkeitswerte ob ein Systemfehler vorliegt. Falls ein Systemfehler aufgetreten ist, werden dann Maßnahmen zur Ausfallsicherung getroffen.

In der japanischen Patentanmeldung JP 2001211466 A wird ein Bildverarbeitungssystem für Fahrzeugkameras beschrieben. Wobei mittels der Fahrzeugkameras Einzelbilder von sich in der Umgebung befindlichen Fahrzeugen aufgenommen werden und daraus Videosignale erzeugt werden. Das Bildverarbeitungssystem umfasst hierbei eine Selbstdiagnoseeinheit. Mittels der Selbstdiagnoseeinheit soll die Funktionsweise der Fahrzeugkameras beurteilt werden. Wobei im Rahmen dieser Beurteilung Einzelbilder der beiden Fahrzeugkameras miteinander verglichen werden. Zum Vergleich werden hierbei Bildverarbeitungsverfahren herangezogen, dabei kommen beispielsweise Verfahren wie optischer Fluß zum Einsatz.

In der Patentanmeldung GB 2276790 A wird ein Tracking-System für Fahrzeuge beschrieben. Das Tracking-System umfasst eine Kamera mittels der Bilder eines in der Umgebung befindlichen Fahrzeugs gebildet und daraus innerhalb einem vorgegebenen Zeitintervall Bildsignale erzeugt werden. Die erzeugten Bildsignale werden hierbei in einem ersten Bildspeicher abgelegt. In einem zweiten Bildspeicher werden die mittels einem Einfangfenster gebildeten Bilder abgelegt. Wobei hierbei zunächst aufgrund einem Fenstereinstellmittel auf den Bildsignalen, welche eine vorgegebene Zeit zuvor gespeichert wurden, ein Einfangfenster eingestellt wird. Die Bilder des Einfangfensters werden sodann im zweiten Bildspeicher als Referenzbild abgelegt. Weiterhin ist eine Einheit zur Ermittlung von Störungen vorgesehen, womit die im ersten Bildspeicher abgelegten Bildsignale dahingehend untersucht werden, ob darin Störungen enthalten sind. Falls Störungen in den Bildsignalen des ersten Bildspeichers enthalten sind, werden diese mittels einer Korrektureinheit korrigiert. Wobei die Korrektur z.B. auf einer Interpolation basiert, wodurch die Störungen der Bildsignale vermindert werden. Eine Fensteraktualisierungseinheit aktualisiert das Einfangfenster entweder entsprechend dem Ergebnis eines Vergleichs der im zweiten Speicher abgelegten Referenzbildsignale mit denen im ersten Bildspeicher abgelegten Bildsignalen oder falls eine Störung beim Vergleich der Referenzbildsignale und den Bildsignalen des ersten Bildspeichers festgestellt wurde. Der Nachteil ist es hierbei jedoch, dass der Fahrer bei der Darstellung der Bildinformationen nicht über die Funktion des Systems informiert wird.

Aus der EP 1 245 443 A2 ist ein Fahrzeugumgebungserfassungssystem mit einer Videobildeinheit bekannt, bei welchem ein aus einem Bild extrahiertes Objekt, insbesondere dessen Position anhand von Fahrzeugparametern, wie der Fahrzeuggeschwindigkeit und der Gierbeschleunigung korrigiert wird.

Der Erfindung liegt daher die Aufgabe zugrunde, eine neuartige Fahrzeugumgebungserfassungseinheit mit einer Videobildanzeige zu schaffen, wobei eine Funktionskontrolle durchgeführt wird.

Die Aufgabe wird gemäß der Erfindung durch eine Fahrzeugumgebungserfassungseinheit mit den Merkmalen des Patentanspruch 1 gelöst. Vorteilhafte Ausgestaltungen und Weiterbildungen der Erfindung werden in den Unteransprüchen aufgezeigt.

Gemäß der Erfindung wird eine Videobildanzeige einer Fahrzeugumgebungseinheit geschaffen, wobei mittels wenigstens einem Bildsensor Umgebungsinformationen erfasst werden. Zunächst werden hierbei die erfassten Umgebungsinformationen mittels einer Rechnereinheit zu Bildinformationen verarbeitet. Die verarbeiteten Bildinformationen werden sodann auf einer Videobildanzeige dargestellt, wobei die dargestellten Bildinformationen zusätzlich in einem Zwischenspeicher abgelegt werden. Die im Zwischenspeicher abgelegten Bildinformationen werden anhand von Bildverarbeitungsalgorithmik mit dem zuletzt erfassten Bild verglichen. Wobei für den Fall, dass bei dem Vergleich des zuletzt erfassten Bildes und den im Zwischenspeicher abgelegten Bildinformationen eine unzulässige Abweichung festgestellt wird, das angezeigte Videobild verändert dargestellt wird. Im Rahmen dieser Erfindung wird unter einer veränderten Darstellung auch eine Ausblendung/Nicht-Darstellung des Bildes verstanden. In erfinderischer Weise werden im Rahmen des Vergleichs des zuletzt erfassten Bildes mit den im Zwischenspeicher abgelegten Bildinformationen zusätzlich Fahrzeug Betriebsparameter berücksichtigt.

Indem Fahrzeug Betriebsparameter berücksichtigt werden, können in einer besonders vorteilhaften Weise die mit der Fahrzeugumgebungseinheit verarbeiteten Bildinformationen einer Plausibilitätsprüfung unterzogen werden. wobei im Rahmen dieser Plausibilitätsprüfung unzulässige Abweichungen zwischen dem zuletzt erfassten Bild und den im Zwischenspeicher abgelegten Bildinformationen betrachtet werden. Zur Feststellung unzulässiger Abweichungen werden hierbei insbesondere die Fahrzeug Betriebsparameter mit den erfassten Bildinformationen oder den Bildparametern der Bildinformationen verglichen. Aufgrund dieser durch die Plausibiltätsprüfung durchgeführten Funktionskontrolle wird es erst möglich, dass der Benutzer über die Funktion der Fahrzeugumgebungseinheit informiert ist.

Bei einer gewinnbringenden Ausführungsform der Erfindung handelt es sich bei einem der Betriebsparameter um einen Parameter, welcher Auskunft darüber gibt, ob sich das Fahrzeug vorwärts oder rückwärts bewegt bzw. stillsteht. Hierzu ist beispielsweise ein Sensor vorgesehen, welcher die Bewegungsrichtung der Räder misst. Auch ist es hierbei denkbar, dass die Bewegungsrichtung des Fahrzeugs anhand der Bewegung der Fahrzeugachse oder direkt am Fahrzeugantrieb z.B. am Getriebe gemessen wird. Aufgrund der Bewegungsinformation kann die mittels der Fahrzeugumgebungserfassungseinheit erfasste Bildinformation einer Plausibilitätsprüfung unterzogen werden. Beispielsweise verändert sich bei der Erfassung von Umgebungsdaten mit einem stillstehenden Fahrzeug die Ansicht der Szene nicht. Jedoch kann sich bei der Umgebungserfassung mit einem stillstehenden Fahrzeug die Position und Größe einzelner Objekte innerhalb einer Szene aufgrund deren Eigenbewegung ändern. Wohingegen mit einem sich in Bewegung befindlichen Fahrzeug Bildinformationen erfasst werden, bei denen sich sowohl die Ansicht der Szene ändert, als auch die Position und Größe einzelner Objekte. Wobei sich die Position und Größe einzelner Objekte aufgrund deren Eigen- und/oder Relativbewegung ändern kann. Dem Fachmann auf dem Gebiet der Bildverarbeitung sind Verfahren bekannt, um anhand erfasster Bildinformationen die Eigenbewegung des Fahrzeugs zu ermitteln. Werden diese ermittelten Daten mit den tatsächlich gemessenen Größen verglichen und stimmen diese überein, ist mit hoher Wahrscheinlichkeit davon auszugehen, dass die Fahrzeugumgebungserfassungseinheit korrekt funktioniert.

Bei einer weiteren gewinnbringenden Ausführungsform der Erfindung handelt es sich bei einem der Betriebsparameter um die Fahrzeuggeschwindigkeit. Hiermit kann die Funktionsweise der Fahrzeugumgebungserfassungseinheit genau überprüft werden. Insbesondere wird dabei anhand der Bildinformationen betrachtet wie sich die Größe und Position von Objekten innerhalb eines bestimmten Zeitraumes verändern. Wobei es sich bei den Objekten beispielsweise um Bäume, Verkehrsschilder oder andere Fahrzeuge handelt. Sind zudem die Abbildungsparameter der Kamera der Fahrzeugumgebungserfassungseinheit bekannt, kann damit die Eigengeschwindigkeit des Fahrzeugs anhand der Bildinformationen zunächst geschätzt und anschließend mit der am Fahrzeug gemessen Geschwindigkeit verglichen werden. Wobei dem Fachmann Tachometereinrichtungen zur Geschwindigkeitsmessung an Fahrzeugen in unterschiedlichen Ausführungsformen bekannt sind.

In besonders vorteilhafter Weise wird bei einer unzulässigen Abweichung des zuletzt erfassten Bildes von den abgelegten Bildinformationen eine Fehlermeldung auf der Videobildanzeige angezeigt wird. Hierbei ist es denkbar, dass zur Darstellung der Fehlermeldung eine Textform oder eine Symbolform gewählt wird. Wobei die Fehlermeldung beispielsweise dem Umgebungsbild überlagert sein kann. Selbstverständlich ist es jedoch auch denkbar den Hintergrund, auf dem die Fehlermeldung dargestellt wird, auch in beliebiger Farbe darzustellen. Hierbei ist ein Mittel vorgesehen wodurch es auch dann möglich ist die Fehlermeldung darzustellen falls die Recheneinheit bzw. der Speicher der Fahrzeugumgebungseinheit nicht korrekt funktionieren oder keine Betriebsparameter für die Auswertung zur Verfügung stehen. In vorteilhafter Weise werden daher beispielsweise für unterschiedliche Fehlerursachen unterschiedliche Fehlermeldungen in einem Lese-Speicher hinterlegt. Diese Fehlermeldungen können dann bei Bedarf auf der Videobildanzeige dargestellt werden.

Daneben hat es sich jedoch auch bewährt, falls bei einer unzulässigen Abweichung des zuletzt erfassten Bildes von den abgelegten Bildinformationen die Videobildanzeige automatisch abgeschaltet wird. Damit soll vermieden werden, dass dem Fahrer fehlerhafte Bildinformationen dargestellt werden oder er Beispielsweise eine Fehlermeldung auf der Videobildanzeige versehentlich übersieht. Hierbei erfolgt die Abschaltung beispielsweise derart, dass die Videobildanzeige vollständig abgeschaltet wird und nur durch den Fahrer erneut aktiviert werden kann. Alternativ ist es jedoch auch denkbar, dass sich bei der Abschaltung ein Standby-Betrieb einstellt. Die Videobildanzeige kehrt dabei vom Standby-Betrieb zum Anzeige-Betrieb zurück, sobald die unzulässige Abweichung zwischen dem zuletzt erfassten Bild und den abgelegten Bildinformationen nicht mehr besteht. Denkbar ist es hierbei auch, dass andere Fahrzeugsysteme die Videobildanzeige während des Standby-Betriebs nutzen können.

Vorteilhaft ist es, dass zur Korrektur des angezeigten Videobildes eine erneute Bildaufnahme angeregt wird, und das neu aufgenommene Bild das zuletzt aufgenommene Bild ersetzt. Eine erneute Bildaufnahme bietet sich beispielsweise insbesondere dann an, falls kurzzeitige unzulässige Abweichungen bei den Bildinformationen vorliegen. Beispielsweise falls die Sicht der Kamera kurzzeitig verdeckt ist. Dies kann z.B. dann der Fall sein, Falls ein Vogel oder herabfallendes Laub von Bäumen relativ dicht vor dem Objektiv der Kamera vorbeifliegt.

Dabei wird eine fest vorgegebene Anzahl von erneuten Bildaufnahmen zugelassen.

Für den Fall, dass nach einer fest vorgegebenen Anzahl erneuter Bildaufnahmen weiterhin eine unzulässige Abweichung der Bildinformationen vorhanden sein sollte bzw. dass eine erneute Anregung der Bildaufnahme nicht möglich ist, wird eine Fehlermeldung auf der Videobildanzeige angezeigt. Die Art und Weise wie dabei die Fehlermeldung auf der Videobildanzeige dargestellt wird, wurde weiter oben bereits beschrieben. Gleichsam ist es denkbar, dass falls eine erneute Anregung der Bildaufnahme nicht möglich ist, dass die Videobildanzeige automatisch abgeschaltet wird. Die Art und Weise wie dabei die Abschaltung der Videobildanzeige erfolgt, wurde weiter oben bereits beschrieben.

In einer weiteren vorteilhaften Ausführungsform wird der Fahrer unabhängig von der Videobildanzeige über eine unzulässige Abweichung des zuletzt erfassten Bildes von den abgelegten Bildinformationen informiert. Wobei ein Warnmittel vorgesehen ist, welches mit der Fahrzeugumgebungserfassungseinheit in Verbindung steht. Informationen über unzulässige Abweichungen werden hierbei unverzüglich an derartige Warnmittel weitergeleitet. Wodurch der Benutzer auch dann vor Fehlfunktionen der Videobildanzeige gewarnt ist, falls er nicht direkt auf die Videobildanzeige blickt bzw. diese Aufgrund von Umgebungsbedingungen nur schwer ablesbar ist. In einer weiteren vorteilhaften Weise werden zur Information des Benutzers hierbei optische Signale verwendet, wobei ein optisches Anzeigemittel als Warnmittel vorgesehen ist. Hierbei kann es sich beispielsweise um eine einfache Kontrollleuchte handeln, welche vorzugsweise im Blickfeld des Fahrers z.B. im Armaturenbrett des Fahrzeugs angeordnet ist. Selbstverständlich kann es sich hierbei aber auch um jede weitere bekannte Ausführungsform eines optischen Anzeigemittels für Fahrzeuge handeln. Wobei auch spezielle Farbgebungen und beispielsweise spezielle Blinkfrequenzen beim Betrieb der Kontrollleuchte denkbar sind. Das optische Warnmittel bleibt hierbei solange aktiviert bis die unzulässige Abweichung zwischen dem zuletzt aufgenommenen Bild und den abgelegten Bildinformationen nicht mehr vorhanden ist. Selbstverständlich ist es auch denkbar, dass das optische Warnmittel solange aktiviert bleibt, bis eine Quittierung durch den Benutzer erfolgt.

Jedoch ist es auch möglich, dass zur Information über Abweichungen zwischen dem zuletzt aufgenommenen Bild und den abgelegten Bildinformationen akustische Signale verwendet werden, wobei ein akustisches Wiedergabemittel als Warnmittel vorgesehen ist. Dabei sind zur Informationswiedergabe unterschiedliche Formen wie z.B. eine Sprachausgabe oder ein Warnton denkbar. Insbesondere kann es sich bei diesen akustischen Wiedergabemitteln beispielsweise um Lautsprecher oder Summer handeln. Derartige akustische Warnmittel können an beliebigen Stellen im Innenraum des Fahrzeugs angebracht werden oder in bereits bestehende akustische Fahrzeugsysteme integriert werden. Das akustische Warnmittel bleibt hierbei vorzugsweise solange aktiviert bis die unzulässige Abweichung zwischen dem zuletzt aufgenommenen Bild und den abgelegten Bildinformationen nicht mehr vorhanden ist. Selbstverständlich ist es auch denkbar, dass das akustische Warnmittel solange aktiviert bleibt, bis eine Quittierung durch den Benutzer erfolgt.

Die Erfindung kann beispielsweise bei einem Fahrzeugumgebungserfassungssystem, insbesondere im Zusammenhang mit einem Nachtsichtsystem eingesetzt werden. Nachtsichtsysteme werden vorzugsweise eingesetzt, um Objekte (z.B. andere Verkehrsteilnehmer) auch bei schlechter Sicht frühzeitig erkennen zu können. Dabei ist es dem Fahrer mittels dem System vor allem möglich in die Ferne zu blicken. Wobei dem Fahrer beispielsweise die Szene dunkel und Objekte hell dargestellt werden. Jedoch ändert sich hierbei die Position von Objekten, welche sich in großer Entfernung vom Fahrzeug befinden, auf der Videobildanzeige nur um wenige Pixel. Daher ist es für den Fahrer in solchen Situationen üblicherweise schwierig zu erkennen ob die Videobildanzeige korrekt funktioniert oder ob es sich um eine Fehlfunktion handelt und beispielsweise trotz Fahrtbewegung ein stehendes Bild anzeigt wird. Falls ein stehendes Bild angezeigt würde, würde der Fahrer aber gerade die interessierenden Objekte wie andere Verkehrsteilnehmer oder plötzlich auftretende Hindernisse nicht angezeigt bekommen.

Auch lässt sich die Erfindung bei einem Fahrzeugumgebungssystem einsetzten, welches insbesondere zur Parkplatzsuche geeignet ist. Derartige Systeme arbeiten mit Bildaufnahmeeinheiten, welche im sichtbaren Spektrum empfindlich sind und zeigen dem Fahrer die Szene der Parklücke im Fahrzeuginnenraum auf einer Videobildanzeige an. Hierbei blickt der Fahrer im Gegensatz zum Einsatz bei einem Nachtsichtsystem nicht in die Ferne sondern in die unmittelbare Umgebung des Fahrzeugs. Da der Blick in die Nähe zur Parkplatzsuche jedoch üblicherweise bei langsamer Fahrt erfolgt, ist es für den Fahrer besonders schwierig die Darstellung eines stehenden Bildes von der Bewegtbilddarstellung zu unterscheiden. Falls der Fall eines stehendes Bild erst kurz vor einem Hindernis eintritt, bleibt dem Fahrer nur kurze Zeit um darauf zu reagieren. Oftmals lässt sich dann eine Kollision nicht mehr vermeiden.

Die **Figur** zeigt beispielhaft den schematischen Aufbau der erfindungsgemäßen Videobildanzeige (1) einer Fahrzeugumgebungserfassungseinheit (0). Hierbei umfasst die Fahrzeugumgebungserfassungseinheit (0) einen Bildsensor (3), mittels dem Umgebungsinformationen erfasst werden. Die erfassten Umgebungsinformationen werden mittels der Recheneinheit (2) zu Bildinformationen verarbeitet und auf der Videobildanzeige (1) dargestellt. Zudem werden die Bildinformationen im Zwischenspeicher (4) abgelegt. Das zuletzt erfasste Bild wird dabei mit den im Zwischenspeicher (4) abgelegten Bildinformationen anhand von Bildverarbeitungsalgorithmik (5) verglichen. Wobei im Rahmen des Vergleichs zusätzlich Fahrzeug Betriebsparameter (6) berücksichtigt werden. Hierbei wird bei einer unzulässigen Abweichung des zuletzt erfassten Bildes von den abgelegten Bildinformationen das angezeigte Videobild verändert dargestellt. Zudem wird der Fahrer bei einer derartigen unzulässigen Abweichung mittels einem Warnmittel (7) gewarnt, welches mit der Fahrzeugumgebungserfassungseinheit (0) in Verbindung steht.

### Bezugszeichenliste

- **0**: Fahrzeugumgebungserfassungseinheit
- **1**: Videobildanzeige
- **2**: Recheneinheit
- **3**: Bildsensor
- **4**: Zwischenspeicher
- **5**: Bildverarbeitungsalgorithmik
- **6**: Betriebsparameter
- **7**: Warnmittel

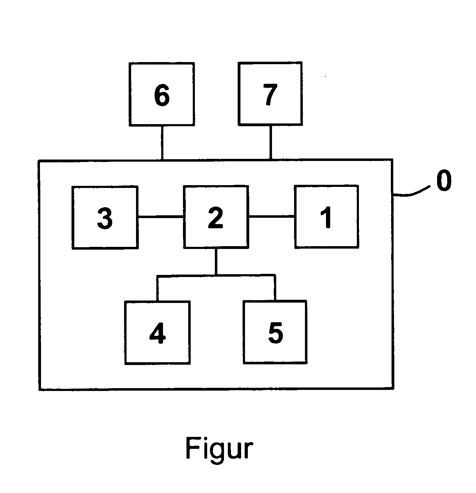

## Patentansprüche

1. Fahrzeugumgebungserfassungseinheit (0) mit einer Videobildanzeige (1),
wobei mittels wenigstens einem Bildsensor (3) Umgebuhgsinformationen erfasst werden,
die erfassten Umgebungsinformationen mittels einer Recheneinheit (2) zu Bildinformationen verarbeitet und auf einer Videobildanzeige (1) dargestellt werden,
die Bildinformationen zusätzlich in einem Zwischenspeicher (4) abgelegt werden,
dass das zuletzt erfasste Bild mit den im Zwischenspeicher abgelegten Bildinformationen anhand von Bildverarbeitungsalgorithmik (5) verglichen wird,
wobei bei einer unzulässigen Abweichung des zuletzt erfassten Bildes von den abgelegten Bildinformationen eine Fehlermeldung auf der Videobildanzeige (1) dargestellt wird, das Videobild ausgeblendet/nicht dargestellt wird oder die Videobildanzeige (1) automatisch abgeschaltet wird,
**dadurch gekennzeichnet,**
**dass** im Rahmen des Vergleichs des zuletzt erfassten Bildes mit den abgelegten Bildinformationen zusätzlich Fahrzeug Betriebsparameter (6) berücksichtigt werden, wobei anhand des Vergleichs eine Plausibilitätsprüfung ausgeführt wird, anhand derer die unzulässigen Abweichungen zwischen dem zuletzt erfassten Bild und den abgelegten Bildinformationen überprüft werden.

2. Fahrzeugumgebungserfassungseinheit (0) nach Anspruch 1,
**dadurch gekennzeichnet,**
**dass** es sich bei einem der Betriebsparameter (6) um einen Parameter handelt, welcher Auskunft darüber gibt, ob sich das Fahrzeug vorwärts oder rückwärts bewegt bzw. stillsteht.

3. Fahrzeugumgebungserfassungseinheit (0) nach einem der vorstehenden Ansprüche,
**dadurch gekennzeichnet,**
**dass** es sich bei einem der Betriebsparameter (6) um die Fahrzeuggeschwindigkeit handelt.

4. Fahrzeugumgebungserfassungseinheit (0) nach einem der vorstehenden Ansprüche,
**dadurch gekennzeichnet,**
**dass** zur Korrektur des angezeigten Videobildes eine erneute Bildaufnahme angeregt wird, und das neu aufgenommene Bild das zuletzt aufgenommene Bild ersetzt.

5. Fahrzeugumgebungserfassungseinheit (0) nach Anspruch 4,
**dadurch gekennzeichnet,**
**dass** für den Fall, dass eine erneute Anregung der Bildaufnahme nicht möglich ist, eine Fehlermeldung auf der Videobildanzeige (1) angezeigt wird.

6. Fahrzeugumgebungserfassungseinheit (0) nach Anspruch 4,
**dadurch gekennzeichnet,**
**dass** für den Fall, dass eine erneute Anregung der Bildaufnahme nicht möglich ist, die Videobildanzeige (1) automatisch abgeschaltet wird.

7. Fahrzeugumgebungserfassungseinheit (0) nach einem der vorstehenden Ansprüche,
**dadurch gekennzeichnet,**
**dass** der Fahrer unabhängig von der Videobildanzeige (1) über eine unzulässige Abweichung des zuletzt erfassten Bildes von den abgelegten Bildinformationen informiert wird, wobei ein Warnmittel (7) vorgesehen ist, welches mit der Fahrzeugumgebungserfassungseinheit (0) in Verbindung steht.

8. Fahrzeugumgebungserfassungseinheit (0) nach Anspruch 7,
**dadurch gekennzeichnet,**
**dass** zur Information optische Signale verwendet werden, wobei ein optisches Anzeigemittel als Warnmittel (7) vorgesehen ist.

9. Fahrzeugumgebungserfassungseinheit (0) nach Anspruch 7,
**dadurch gekennzeichnet,**
**dass** zur Information akustische Signale verwendet werden, wobei ein akustisches Wiedergabemittel als Warnmittel (7) vorgesehen ist.

10. Fahrzeugumgebungserfassungseinheit (0) nach einem der Ansprüche 1 bis 9 zur Verwendung bei einem Nachtsichtsystem.

11. Fahrzeugumgebungserfassungseinheit (0) nach einem der Ansprüche 1 bis 9 zur Verwendung bei einem System zur Parkplatzsuche.

## Claims

1. Data collection unit (0) for vehicle environment, comprising a video display (1),
wherein environmental data are collected by means of at least one image sensor (3),
the collected environmental data are processed by means of a computing unit (2) into image data and displayed on a video display (1),
the image data are additionally stored in a buffer memory (4),
the image collected last is compared to the image data stored in the buffer memory using image processing algorithms (5),
wherein, if the image collected last deviates excessively from the stored image data, an error message is displayed on the video display (1), the video image is blocked out/not displayed, or the video display (1) is switched off automatically,
**characterised in that**
within the comparison of the image collected last to the stored image data, additional vehicle operating parameters (6) are taken into account, wherein a plausibility check is carried out using the comparison, by means of which plausibility check the excessive deviations between the image collected last and the stored image data are checked.

2. Data collection unit (0) for vehicle environment according to claim 1,
**characterised in that**
one of the operating parameters (6) is a parameter which provides information on whether the vehicle is moving forwards or backwards or is stationary.

3. Data collection unit (0) for vehicle environment according to any of the preceding claims,
**characterised in that**
one of the operating parameters (6) is the travelling speed of the vehicle.

4. Data collection unit (0) for vehicle environment according to any of the preceding claims,
**characterised in that**
a renewed video recording is initiated for the correction of the displayed video image and the newly recorded image replaces the image recorded last.

5. Data collection unit (0) for vehicle environment according to claim 4,
**characterised in that**
if a renewed initiation of video recording is impossible, an error message is displayed on the video display (1).

6. Data collection unit (0) for vehicle environment according to claim 4,
**characterised in that**
if a renewed initiation of video recording is impossible, the video display (1) is switched off automatically.

7. Data collection unit (0) for vehicle environment according to any of the preceding claims,
**characterised in that**
the driver is informed about any excessive deviation of the image collected last from the stored image data independently of the video display (1), a warning means (7) connected to the data collection unit (0) for vehicle environment being provided.

8. Data collection unit (0) for vehicle environment according to claim 7,
**characterised in that**
optical signals are used for information, a visual display being provided as a warning means (7).

9. Data collection unit (0) for vehicle environment according to claim 7,
**characterised in that**
acoustic signals are used for information, an acoustic reproduction means being provided as a warning means (7).

10. Data collection unit (0) for vehicle environment according to any of claims 1 to 9 for use in a night vision system.

11. Data collection unit (0) for vehicle environment according to any of claims 1 to 9 for use in a system for parking space search.

## Revendications

1. Système de collecte de données pour véhicule (0) doté d'un affichage d'image vidéo (1), les informations relatives à l'environnement étant détectées au moyen d'un capteur d'image (3), lesdites informations relatives à l'environnement détectées étant traitées en informations d'image par une unité de calcul (2) et représentées sur un affichage d'image vidéo (1), les informations d'image sont en outre stockées dans une mémoire temporaire (4), la dernière image détectée étant comparée au moyen d'un algorithme de traitement d'image (5) aux informations d'image stockées dans la mémoire temporaire, en cas d'écart inacceptable entre la dernière image détectée et les informations d'image stockées, un message d'erreur s'affiche sur l'affichage d'image vidéo (1), l'image vidéo est masquée / n'est pas affichée ou l'affichage d'image vidéo (1) s'éteint automatiquement, **caractérisé en ce que** dans le cadre de la comparaison de la dernière image détectée avec les informations d'image stockées, des paramètres de fonctionnement véhicule (6) sont en outre pris en compte, à l'aide de la comparaison un contrôle de la plausibilité est réalisé, lequel permet de vérifier les écarts inadmissibles entre la dernière image détectée et les informations d'image stockées.

2. Système de collecte de données pour véhicule (0) selon la revendication 1, **caractérisé en ce que** l'un des paramètres de fonctionnement (6) est un paramètre qui indique si le véhicule se déplace vers l'avant ou vers l'arrière ou s'il est à l'arrêt.

3. Système de collecte de données pour véhicule (0) selon l'une quelconque des revendications précédentes, **caractérisé en ce que** l'un des paramètres de fonctionnement (6) est la vitesse du véhicule.

4. Système de collecte de données pour véhicule (0) selon l'une quelconque des revendications précédentes, **caractérisé en ce qu'**une nouvelle prise de vue est déclenchée pour corriger l'image vidéo affichée, et la nouvelle image remplace la dernière image réalisée.

5. Système de collecte de données pour véhicule (0) selon la revendication 4, **caractérisé en ce qu'**au cas où un nouveau déclenchement de la prise de vue n'est pas possible, un message d'erreur s'affiche sur l'affichage d'image vidéo (1).

6. Système de collecte de données pour véhicule (10) selon la revendication 4, **caractérisé en ce qu'**au cas où un nouveau déclenchement de la prise de vue n'est pas possible, l'affichage d'image vidéo (1) s'éteint automatiquement.

7. Système de collecte de données pour véhicule (0) selon l'une quelconque des revendications précédentes, **caractérisé en ce que** le conducteur est informé indépendamment de l'affichage d'image vidéo (1) d'un écart inadmissible entre la dernière image détectée et les informations d'image stockées, il est prévu un moyen d'avertissement (7) qui est en relation avec le système de collecte de données pour véhicule.

8. Système de collecte de données pour véhicule (0) selon la revendication 7, **caractérisé en ce que** des signaux visuels sont utilisées pour fournir des informations, un indicateur visuel étant prévu en tant que moyen d'avertissement (7).

9. Système de collecte de données pour véhicule (0) selon la revendication 7, **caractérisé en ce que** des signaux acoustiques sont utilisés pour fournir des informations, un moyen de reproduction acoustique étant prévu en tant que moyen d'avertissement (7).

10. Système de collecte de données pour véhicule (0) selon l'une quelconque des revendications 1 à 9, utilisé avec un système de vision nocturne.

11. Système de collecte de données pour véhicule (0) selon l'une quelconque des revendications 1 à 9, utilisé avec un système de recherche de stationnement.
